(19) **Europäisches Patentamt**
**European Patent Office**
**Office européen des brevets**

(11) **EP 1 625 757 B1**

(12) **EUROPEAN PATENT SPECIFICATION**

(45) Date of publication and mention
of the grant of the patent:
**18.04.2007 Bulletin 2007/16**

(51) Int Cl.:
**_H04Q 3/66_** ^(2006.01)

(21) Application number: **04731983.5**

(22) Date of filing: **10.05.2004**

(86) International application number:
**PCT/IB2004/050622**

(87) International publication number:
**WO 2004/102989 (25.11.2004 Gazette 2004/48)**

(54) **TIME-DIVISION MULTIPLEXING CIRCUIT-SWITCHING ROUTER**

ZEITMULTIPLEXLEITUNGSVERMITTLENDER ROUTER

ROUTEUR DE COMMUTATION DE CIRCUITS A MULTIPLEXAGE PAR REPARTITION DANS LE TEMPS

(84) Designated Contracting States:
**AT BE BG CH CY CZ DE DK EE ES FI FR GB GR HU IE IT LI LU MC NL PL PT RO SE SI SK TR**

(30) Priority: **14.05.2003 EP 03101327**

(43) Date of publication of application:
**15.02.2006 Bulletin 2006/07**

(73) Proprietor: **Koninklijke Philips Electronics N.V.**
**5621 BA Eindhoven (NL)**

(72) Inventor: **WIELAGE, Paul**
**NL-5656 AA Eindhoven (NL)**

(74) Representative: **Eleveld, Koop Jan**
**Philips Intellectual Property & Standards,**
**P.O. Box 220**
**5600 AE Eindhoven (NL)**

(56) References cited:
**EP-A- 0 798 942          US-A- 615 444**
**US-A1- 2003 026 260**

**Description**

FIELD OF THE INVENTION

The present invention relates to a time-division multiplexing circuit-switching router, comprising a plurality of input means, at least one output means, switching means for switching between the input means and the output means and for connecting a selected input means to output means during a predetermined time slot, and a router table means for controlling said switching means, said router table means including instructions which input means be connected to output means for a predetermined time slot.

BACKGROUND OF THE INVENTION

To realize precision in latency and throughput for communication over shared interconnection, conventional communication architectures rely typically on the arbitration scheme called time-multiplexed multiple access (TDMA). An arbitration scheme does contention resolution and is essential in case of communication over shared interconnect lines. TDMA works like a time wheel (of slots) where each slot can be statically reserved for a unique master. If the time wheel consists of S slots and each slot takes an equal amount of time, then every slot reservation corresponds with 1/Sth of the available bandwidth $B$ of the bus. Multiple slots have to be reserved for connections, which need more bandwidth than $B/S$. The slot reservations are stored in a table, which is typically implemented by an embedded memory like e.g. a random access memory (RAM) or a first-in-first-out (FIFO) buffer.

A problem arises when the range of bandwidth requirements of the programmed connections is large (e.g. 1 Mb/s to 20 Gb/s). Then either many slots (>20000 for the given example) in the time wheel or something else are needed to realize a large ratio with less than 20000 slots.

Managing the complexity of designing chips containing billions of transistors requires decoupling computation from communication. For communication, scalable and compositional interconnects, such as networks on chip (NoC), must be used. So, the future of on-chip communication is an on-chip network of routers. Circuit-switching allows to establish connection over a conceptual physical path from a source to a destination. An on-chip router network consists, among other parts, of interconnected routers.

US 4 466 060 A discloses an adaptive distributed message routing algorithm for controlling the routing of data messages in a packet message switching digital computer network. Network topology information is exchanged only between neighbour nodes in the form of minimum spanning trees, referred to as exclusionary trees. An exclusionary tree is formed by excluding the neighbour node and its links from the tree. From the set of exclusionary trees received a route table and transmitted exclusionary trees are constructed.

WO 01/89158 A1 discloses a method for controlling resources in a communication network comprising nodes interconnected by links, each carrying a bitstream which is divided into frames, each frame in turn being divided into time slots which are allocatable to form circuit-switched channels. Resources in the form of write access to time slots are associated with administrative entities. Allocation of resources is then done in such a way the allocation of resources to channels pertaining to a subject administrative entity is guaranteed to the extent by which resources have been associated with the subject administrative entity.

US 2003/026260 discloses another example.

In an on-chip router network using time-division multiplexing (TDM), physical links can be shared to achieve a higher utilization of the interconnect resources. This requires control to set a switch inside the router and this control information is stored in a so-called slot, i. e. a predetermined unit of time, or router table.

SUMMARY OF THE INVENTION

An object of the present invention is to provide a time-division multiplexing circuit-switching router which is able to be used in an on-chip router network under reduced costs.

In order to achieve the above and further objects, there is provided a time-division multiplexing circuit-switching router, comprising a plurality of input means, at least one output means, switching means for switching between said input means and said output means and for connecting a selected input means to a selected output means during a predetermined time slot, and a router table means for controlling said switching means, said router table means including instructions which input means be connected to output means for a predetermined time slot, characterized in that said router table means is divided into a plurality of tables, each table having a weight which specifies the amount of bandwidth per slot in one table in relation to a slot in the other table(s).

Due to the invention the size of the router table means is reduced resulting in a reduction of the corresponding silicon area and overhead and, thus, in a saving of costs which is important for the provision of an on-chip router network. Further, the invention allows for a finer bandwidth granularity for the same size of the router table means and, thus, the same costs resulting in more efficient use of the available bandwidth in the network, since high bandwidth data streams can be covered by a higher weighted table such that less time slots need to be allocated. The invention can be used in all digital system-on-chip ICs.

Preferably, the weights of the tables are programmable.

Each table can include a number ($S_1$) of rows, and per predetermined time period the tables are cycled a number ($w_1$) of times corresponding to the respective weight ($w_1 \geq 1$), so that preferably the effective slot cycle period ($S_e$) is

$$S_e = \sum_{l=1}^{L} w_l \cdot S_l$$

The way in which entries of the tables are enumerated depends on the latency requirements through a network the router is connected to.

In a further preferred embodiment comprising a plurality of buffer means, each connected between an input means and the switching means, respectively, each buffer means comprises a plurality of buffer portions corresponding to the plurality of tables, each buffer portion being allocated to a table, respectively, wherein the router table means is provided for controlling the buffer portions in accordance with the tables. Such a buffering concept is more elegant than a shared buffering concept, since the incoming flow control digits are stored in such buffer means per table so that the various levels of the TDMA schedule become logically independent. Preferably, said buffer means is a first-in-first-out (FIFO) buffer means.

The above described objects and other aspects of the present invention will be better understood by the following description and the accompanying Figures.

In the following a preferred embodiment of the present invention is described with reference to the drawings in which

BRIEF DESCRIPTION OF THE DRAWINGS

Figure 1 shows a schematic basic block diagram of a time-division multiplexed circuit-switching router;
Figure 2 schematically shows a combination of two routers connected in series and the flow of four guaranteed throughput data streams;
Figure 3 schematically shows an example of a simple router network with two 2x2-routers and the flow of three data streams, two being best-effort and one being guaranteed-throughput;
Figure 4 shows a schematic block diagram of a time-division multiplexed circuit-switching router including a multi-layer router table according to a preferred embodiment of the invention;
Figure 5 a schematic diagram of the flow of three data streams, which propagate through a network consisting of two routers according to a preferred embodiment of the invention; and
Figure 6 shows a schematic block diagram of a plurality of buffers which are included in the router of Figure 4 per input.

DESCRIPTION OF A PREFERRED EMODIMENT

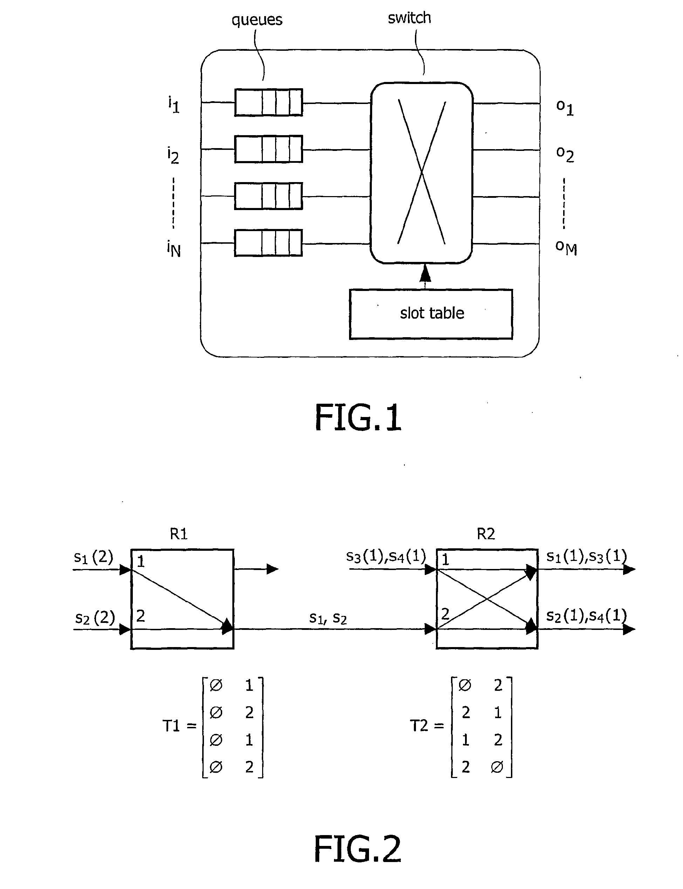

The architecture of a simple router for circuit-switching is depicted in Figure 1 for explanation purposes. The router consists of *N* input ports including buffers, *M* output ports and a switch to forward data from the inputs to the outputs (concurrently) according to a router table. Circuit-switching allows to establish connections over a physical path from a source to a destination for a certain amount of time (Leijten, J.A.J.; van Meerbergen, J.L.; Timmer, A.H.; Jess, J.A.G.; "Stream communication between real-time tasks in a high-performance multiprocessor", Design, Automation and Test in Europe, 1998, Proceedings, 23-26 Feb 1998, page 125 -131).

In the routers the data is for a certain amount of time stored in queues because of timing implementation reasons. Consequently, circuit-switching over a router network differs from a shared bus TDMA architecture in that the data transport over the network involves multiple hops (one for each router on the path) instead of only one, wherein each hop (router) has a different router table. Furthermore circuit-switching is a special form of TDMA where by master-slave, or in the context of routers input-output port, pairs are scheduled as explained below.

The router table of an individual router contains the information to program a crossbar switch in a contention free manner over time. For this reason, time is divided into fixed units of time called slots. During a slot, a unit of data called a flit (flow control digit) can be forwarded by the crossbar switch from a router input-buffer to an output. The input/output mapping in a specific slot is specified by the router table $T$, being a matrix of size $S \times M$, where $S$ is the number of slot entries and $M$ is the number of output terminals of the router. The elements of $T$ are in the set $\{\varnothing, 1..., N\}$. The value $n = T(s, m)$, with $0 \leq s < S$ and $0 < m \leq M$, means that in slot $s$, if $n \neq \varnothing$, a flit is forwarded from input $i_n$ to output $o_m$. So, row s of $T$ specifies the mapping in slot s. The slot assignment $T$ is periodically repeated over time according to $s = k$ mod $S$, with $k$ being a slot iterator.

Accordingly, the router table of every router in the network has S time slots. There is a logical notion of synchronicity: All routers in a network are in the same fixed-duration slot, as already mentioned before. In a slot iteration k, at most one block of data is written per output port. The outputs of the routers in a network are connected to inputs of routers by means of links between input / output pairs. Such a link causes a block that is being written to an output in slot iteration $k$ to be present in the queue of an input that is connected via a link, at the next slot iteration. During the next slot $k+1$ or later, the arrived blocks are again written to their appropriate output ports. The blocks thus propagate in a store and forward fashion. The latency a block incurs per router is equal to the duration of a slot multiplied by the difference in the arrival and departure time of the block (which is given by the reservations of two subsequent routers along the path). The bandwidth is guaranteed in multiples of block size per $S$ slots.

The slots reserved for a path from a source to a destination increase at least by one (modulo $S$) per router. If slot $s$ is reserved in some router on the path and slot $(s + q)\%S$, with $q > 0$, is reserved in the next router on the path, the incurred latency for this part of path is $q$ slots.

The order in which blocks at an input of a router arrive must be the same as the order in which these blocks are being written through one of the outputs of the router. This allows implementing the queues connected to the inputs by means of FIFOs.

The entries of the router table map outputs to inputs for every slot, i.e. $T(s, o) = i$. An entry is empty, when there is no reservation for that output in that slot. No contention arises because there is at most one input per output. Sending a single input to multiple outputs (multicast) is possible.

In a GT (Guaranteed-Throughput) routing approach, every GT token, which is read in time slot s in some router, is read in time slot $(s+q)\%S$ in the next router in the path the token follows. The value of $q$ is at least one and is a result of the chosen schedule. It is preferably as small as possible since the overall latency of connection is equal to the sum of all q's along the path. Guwanteed-throughput (GT) services require resource reservation for worst-case scenarios, which can be expensive.

An example of a simple router network including two 2x2-routers $R1$ and $R2$ with a router table size $S = 4$ is shown in Figure 2. In this Figure four GT connections are represented by the data streams $s_1$, $s_2$, $s_3$, and $s_4$. The number of time slots allocated for that data stream is shown in parentheses in Figure 2.

The first output port (shown as upper port in Figure 2) of the first router $R1$ is unused and, consequently, the first column of the routing table is empty. The second column of the routing matrix of the first router $R1$ indicates that tokens from its inputs are written alternately on the second output port (shown as the lower port in Figure 2). Consequently, both data streams $s_1$ and $s_2$ are routed with the desired bandwidth without contention in the first router $R1$. In the second router $R2$, the first output port (shown as the upper port in Figure 2) receives tokens of the data streams $s_1$ and $s_3$. Since the tokens from the data stream $s_1$ are routed in the time slots 0 and 2 in the first router $R1$, they are routed at time slots 1 and 3 in the second router $R2$. This is seen by the two "1" in the first column of the router table of the second router $R2$. The single time slot required by the data stream $s_3$ is scheduled in the time slot 2 of the first column. Similarly, as indicated by "1" in the second column of the router table of the second router $R2$, tokens of the data stream $s_2$ are scheduled in the time slots 0 and 2. Finally, the tokens of the data stream $s_4$ are scheduled in the time slot 1.

It is not required that a GT token is available in every reserved time slot. When no GT packet arrives in a reserved time slot, a BE (best effort) packet can be sent over the claimed but unused time slot of the link. Best-effort (BE) services do not reserve any resource, and hence provide no guarantees, but use resources well because they are typically designed for average-case scenarios instead of worst-case scenarios.

The number S of slots in the router table determines the granularity in which the total amount of bandwidth of a link can be divided. If $B$ represents the amount of bandwidth per link, then a single connection can allocate bandwidth in chunks of $B/S$. Hence, increasing S, which means increasing the number of slot-table entries of all routers, results in a finer granularity. However, a bigger size of the router table results in higher costs of the router in terms of silicon area. Current estimations show that the router table can take as much as 50% of the total router silicon area. A large router table has also an operational disadvantage. Namely, for the high and medium bandwidth connections a large number of slots must be programmed. This is expensive in terms of the connection setup and teardown time.

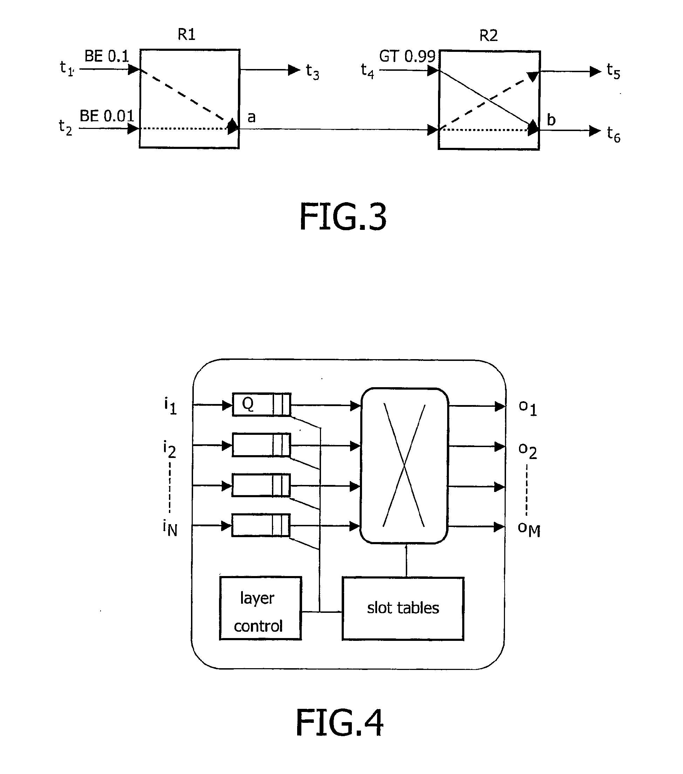

Figure 3 shows as an example a combination of two 2x2-routers $R1$ and $R2$ connected in series, wherein the two 2x2-routers are indicated by $R1$ and $R2$, and the network terminals are identified by $t_i$ ($i = 1, 2, ..., 6$).

Assume that the first router $R1$ receives BE packets via terminal $t_1$, which are all destined to the terminal $t_5$ and that the bandwidth of these packets require 10 % of the capacity of a link. Similarly, packets go from the terminal $t_2$ to the terminal $t_6$ and require only 1 % of the link capacity. The second router $R2$ receives a GT data stream via the terminal $t_4$ which is destined to the terminal $t_6$. The GT data stream claims and uses 99 % of the bandwidth and thus occupies the output link from output port b of the router *R2* to the terminal $t_6$ for 99 % of time. So, the BE stream sharing port b can send a flit only in the remaining 1 % link capacity, and every time GT data arrives for port b the transmission of the BE packet over port b is pre-empted.

This can cause long latencies for the packets of the 1 % BE data stream, wherein latency is defined as the duration a packet is transported over the network. It also causes the link between the routers *R1* and *R2* to be occupied almost continuously by the 1 % BE stream because flits of different packets are not interleaved. Thus, BE packets of the 10 % data stream obtain less than 10 % of the rate of the link. This means that in the example of Figure 3 the link between the routers *R1* and *R2* has a utilization that is even below 11 % of its theoretical capacity.

In order to overcome this problem there are basically three approaches: (1.) using virtual cut-through routing rather than a so-called wormhole routing, (2.) performing GT communication in relatively large blocks of data and large periods of no data, and (3.) using a GT service for the 1% BE stream.

The first approach guarantees that a complete packet will be accepted in the next router such that the incoming link of the next router does not block. However, this is at the cost of extra memory.

The second approach ensures that flit pre-emption rarely occurs. When the 99 % of GT data is grouped in blocks of 10 time units, then this bandwidth is obtained by alternative sending 99 blocks of data followed by 10 time units nothing. When the packet size of the BE data stream is small compared to such 10 time units, a complete packet of the 1 % BE data stream is sent in the 10 time units and the link between the routers *R1* and *R2* can be used by the 10 % BE data stream immediately after the packet has been sent. While the first approach suffers from additional memory requirements in the router, this second approach suffers from additional latency in the BE data stream.

In the third approach, a GT service is used to realize the connection between the terminals $t_2$ and $t_6$. Consequently, the relatively low bandwidth stream is scheduled at specific moments in time by means of reserving 1 out of every 100 slots in the routing table. This requires the slot table to have a size of at least 100 entries. Since a GT service results in a circuit-switched connection during the reserved period over time, the connection uses at most 1 % of the link capacity between the routers *R1* and *R2*. The remaining link capacity is available for the 10 % BE stream.

The third approach requires a provision for efficiently storing a set of connections with both low and high bandwidth requirement. This is achieved by means of a layered reservation table. Given the substantial amount of area overhead consumed by the reservation table, it is structured into *L* layers: $T = (T_1, ... , T_L)$. The table of layer $l = 1, . . . , L$ has a size of $S_l$ rows and a weight of $w_l \geq 1$. The weight specifies the amount of bandwidth a slot in the corresponding reservation table represents in proportion to the weight of the other layers. This is realized by constructing a combined schedule of the L tables, in which per period the tables $T_l$, $l = 1, ... , L$ are cycled $w_l$ times respectively. Hence the effective slot cycle period $S_e$ becomes

$$S_e = \sum_{l=1}^{L} w_l \cdot S_l \tag{1}$$

and this at the cost of much less physical reservation table entries

$$S = \sum_{l=1}^{L} S_l \tag{2}$$

From equation (1) it follows that a slot at layer *l* corresponds with a fraction $w_l / S_e$ of the total link bandwidth B.

Such a router architecture including multi-layer router table is schematically shown in Figure 4.

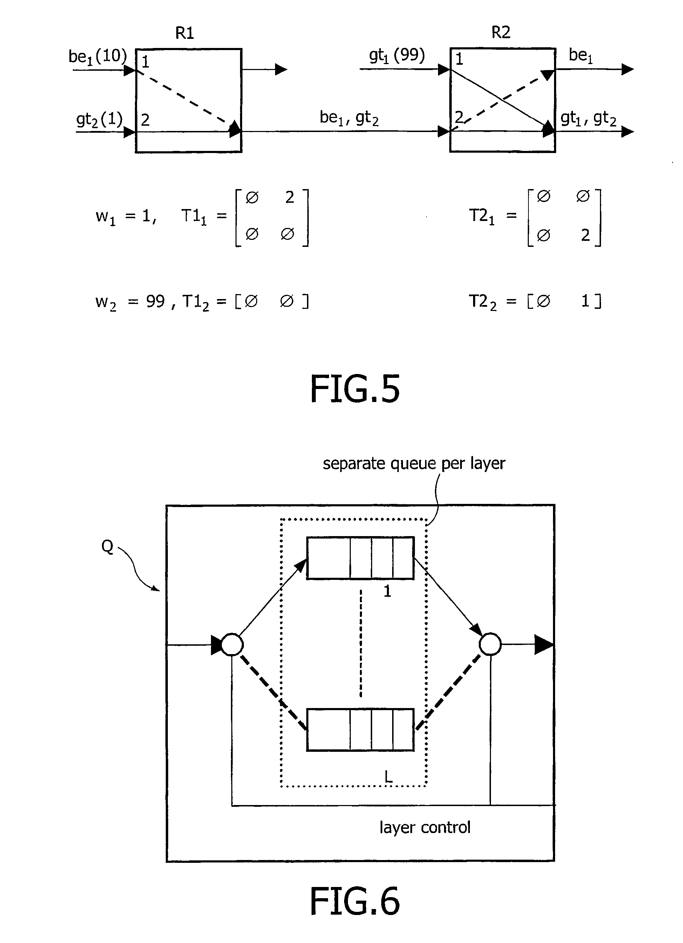

Figure 5 shows the filling of the router tables for the situation as illustrated in Figure 3 according to the multi-layer approach. Here, two layers are required. One stream is a best-effort stream, which is denoted by $be_1$, and two other streams are guaranteed-throughput. These are denoted by $gt_1$ and $gt_2$. The router table of each router, which schedules both streams, is divided in two layers, each having a different weight. The first layer 1 has a weight of 1 and supports $gt_2$. The second layer 2 has a weight of 99 and supports $gt_1$. The matrices $T1_1$ and $T2_1$ define two sub-tables associated with the first layer 1 for the routers R1 and R2 respectively. The matrices $T1_2$ and $T2_2$ give the reservations for the second layer 2. Consequently, a reservation of a slot in the second layer 2 requires 99 times more bandwidth allocation than a reservation of a slot in the first layer 1. As a result of the two-layer approach, the total number of slot entries *S* does not need to be larger than 3 for this case.

The way in which the entries of the various tables are enumerated depends on the latency requirements through the network and if it is wanted to spend extra costs in the terms of independent buffering per layer.

The following description deals with two buffer options. In both cases switching from one layer to another is assumed to be done synchronously for all routers in the network.

Since the tables of the various layers are interleaved in time, the layer controller of the router will, sooner or later, interrupt the enumeration of the table of one layer to continue with one of the other layers. If a first-in-first-out (FIFO) buffer policy is employed per input, the FIFOs should not contain data that belongs to the level when the controller switches to another layer, otherwise data get messed up. It is not trivial to find such a point in the tables of all routers for a specific layer, because in general many paths through the network do overlap each other in time. A natural point where a clean switch to a different layer can be performed without intersecting paths could be after the last entry of the table. But in case of a circular schedule such a point does not exit at all. Namely, a circular schedule allows to divide a path through the routers in two pieces; the first part uses slots at the end of the table, the second part uses slots at the beginning of the table. In other words, a path can be wrapped over the boundary of the table. In practice, a schedule with valid interruption points for the "single FIFO per input approach" can result in a deterioration of the link utilization.

A more elegant buffer approach stores the incoming flits in a FIFO per level as depicted in Figure 6 in conjunction with Figure 4. As shown in Figure 4, a plurality of buffers Q is provided, wherein each input $i_l$ to $i_N$ is coupled to such a buffer Q. In Figure 6, the construction of such a buffer Q is schematically shown. In this concept, the various levels of the TDMA schedule use different queues, as such becoming logically independent. Hence, reservation tables are allowed to be circular and switching between the layers is possible at any moment in time.

It is to be noted that the latency through the network is not the same for the two buffering strategies.

For reasons of convenience, the ratio between the high and low bandwidth connections and the number of connections are kept small, respectively 1 to 99 and 3. In practice however, the ratio and the number of connections can be much larger.

The advantage of a multi-level slot table is shown as follows. For reasons of simplicity, suppose a network-on-chip consisting of just one router according to Fig. 4. Furthermore, let us focus on the guaranteed throughput connections that flow through one particular output port. Suppose there are 60 GT streams through this output. The bandwidth requirements of these streams is as follows: 50 GT-streams of 1 Mb/s and 10 GT-streams of 1 Gb/s. Hence, the total aggregated bandwidth is at least 10.05 Gb/s.

Three examples A, B and C of the slot-table, which differ in the number of layers and the number of slot-table entries, will be discussed as follows.

Example A makes use of one slot-table consisting of 10050 slots. Let the bandwidth of a single link be 10.05 Gb/s such that the bandwidth per slot becomes 1/10050 x 10.05 Gb/s = 1 Mb/s. Now the 50 GT-streams of 1 Mb/s need to reserve 1 slot each and the 10 GT-streams of 1 Gb/s need to reserve 1000 slots each.

Example B again makes use of a single layered slot-table but now consisting of just 250 slot entries. This reduced number of slot entries saves a significant amount of costs. The optimal distribution of the 256 slots over the 60 streams is as follows: the 50 streams of 1Mb/s use one slot each, the 10 streams of 1 Gb/s use the remaining slots which means 20 each. Now, to fulfil the bandwidth requirement of all streams the bandwidth of the link must be 250/20 x 1 Gb/s = 12.5 Mb/s. Consequently, the bandwidth per slot is 50 Mb/s. One can see that this realization has disadvantages; firstly, it requires links with 25% more bandwidth than Example A and secondly, this extra bandwidth is not available for other connections since the bandwidth granularity of 50 Mb/s does not allow so.

Example C makes use of a two layer slot-table. The first layer of the slot-table consists of 50 entries with a bandwidth per slot of 1 Mb/s. The second layer of the slot-table consists of 10 entries, where the bandwidth of each slot is 1 Gb/s. Consequently the weights, $w_l$, of the subsequent layers is 1 and 1000. This realization requires the bandwidth of the link to be 10.05 GB/s just like in example A, however now we need only 60 slot table entries in total which is just 0.6% of the number in example A.

Although the invention is described above with reference to examples shown in the attached drawings, it is apparent that the invention is not restricted to it, but can vary in many ways within the scope disclosed in the attached claims.

**Claims**

1. A router, comprising

   - a plurality of input means ($i_1$,..., $i_N$),
   - at least one output means ($o_1$,..., $o_M$),
   - switching means for switching between said input means ($i_1$,...,$i_N$) and said output means ($o_1$,..., $o_M$) and for connecting a selected input means to output means during a predetermined time slot, and
   - a router table means for controlling said switching means, said router table means including instructions which input means be connected to output means for a predetermined time slot,

**characterized in that**
said router table means is divided into a plurality of tables T$\ell$,$\ell$=1,...L, each table having a weight, $w_l$ greater or equal 1, which specifies the amount of bandwidth per slot in one table in relation to a slot the other table or tables.

2. The router according to claim 1, wherein the router table means is divided into a plurality of hierarchical levels and each table is allocated to a certain hierarchical level.

3. The router according to claim 1 or 2, wherein the weights of said tables are programmable.

4. The router according to at least any one of the preceding claims, wherein each table $T_l$ includes a number $S_l$ of rows.

5. The router according to at least any one of the preceding claims, wherein per predetermined time period the tables $T_l$ are cycled a number $w_l$ of times corresponding to the respective weight $w_e$ greater or equal 1.

6. The router according to claims 4 and 5, wherein the effective slot cycled period $S_e$ is

$$S_e = \sum_{l=1}^{L} w_l \cdot S_l$$

7. The router according to at least any one of the preceding claims, wherein the way in which entries of the tables $T_l$ are enumerated depends on latency requirements through a network of which the router is being a part.

8. The router according to at least any one of the preceding claims, comprising a plurality of buffer means (Q), each connected between an input means ($i_1$,..., $i_N$) and the switching means, respectively, wherein each buffer means (Q) comprises a plurality of buffer portions 1,..., L corresponding to the plurality of tables $T_l$, each buffer portion being allocated to a table, respectively, wherein the router table means is provided for controlling the buffer portions in accordance with said tables.

9. The router according to claim 8, wherein said buffer means (Q) is a first-in-first-out buffer means.


**Patentansprüche**

1. Router, umfassend

- mehrere Eingangsmittel ($i_1$, ..., $i_N$),
- zumindest ein Ausgangsmittel ($o_1$, ..., $o_M$),
- Schaltmittel zum Schalten zwischen den Eingangsmitteln ($i_1$, ..., $i_N$) und den Ausgangsmitteln ($o_1$, ..., $o_M$) und zum Verbinden eines ausgewählten Eingangsmittels während eines vorbestimmten Zeitschlitzes mit Ausgangsmitteln, und
- ein Routertabellenmittel zum Steuern der Schaltmittel, wobei das Routertabellenmittel Anweisungen beinhaltet, welche Eingangsmittel für einen vordefinierten Zeitschlitz mit Ausgangsmitteln verbunden werden sollen,

**dadurch gekennzeichnet, dass** das Routertabellenmittel in mehrere Tabellen $T_l$, $l$ = 1, ..., L, geteilt ist, wobei jede Tabelle ein Gewicht $w_e$ von größer als oder gleich 1 aufweist, das die Menge der Bandbreite pro Schlitz in einer Tabelle im Verhältnis zu einem Schlitz in der anderen Tabelle oder in den anderen Tabellen angibt.

2. Router nach Anspruch 1, wobei die Routertabelle in mehrere hierarchische Ebenen geteilt ist und jede Tabelle einer bestimmten hierarchischen Ebene zugeteilt ist.

3. Router nach Anspruch 1 oder 2, wobei die Gewichte der Tabellen programmierbar sind.

**4.** Router nach zumindest einem der vorhergehenden Ansprüche, wobei jede Tabelle $T_l$ eine Anzahl $S_l$ von Zeilen beinhaltet.

**5.** Router nach zumindest einem der vorhergehenden Ansprüche, wobei die Tabellen $T_l$ pro vorbestimmtem Zeitraum eine Anzahl $w_l$ von Malen, die dem jeweiligen Gewicht $W_e$ von größer als oder gleich 1 entspricht, durchlaufen werden.

**6.** Router nach Anspruch 4 und 5m, wobei der wirksame Schlitzablaufzeitraum $S_e$

$$S_e = \sum_{l=1}^{L} w_l \cdot S_l$$

beträgt.

**7.** Router nach zumindest einem der vorhergehenden Ansprüche, wobei die Weise, auf die Einträge der Tabellen $T_l$ aufgezählt sind, von Wartezeitanforderungen durch ein Netz, wovon der Router ein Teil ist, abhängen.

**8.** Router nach zumindest einem der vorhergehenden Ansprüche, umfassend mehrere Puffermittel (Q), die jeweils zwischen einem Eingangsmittel ($i_1$, ..., $i_N$) und den Schaltmitteln angeschlossen sind, wobei jedes Puffermittel (Q) mehrere Pufferabschnitte 1, ..., L umfasst, die den mehreren Tabellen $T_l$ entsprechen, wobei jeder Pufferabschnitt jeweils einer Tabelle zugeteilt ist, wobei das Routertabellenmittel zum Steuern der Pufferabschnitte gemäß den Tabellen bereitgestellt ist.

**9.** Router nach Anspruch 8, wobei das Puffermittel (Q) ein Prioritätssteuerungspuffermittel ist.

**Revendications**

**1.** Routeur, comprenant :

- une pluralité de moyens d'entrées ($i_1$, ... $i_N$),
- au moins un moyen de sortie ($o_1$, ..., $o_M$),
- des moyens de commutation pour commuter entre lesdits moyens d'entrée ($i_1$, ..., $i_N$) et lesdits moyens de sortie ($o_1$, ..., $o_M$) et pour connecter un moyen d'entrée sélectionné à des moyens de sortie pendant un créneau temporel prédéterminé, et
- un moyen à table de routage pour commander lesdits moyens de commutation, ledit moyen à table de routage comprenant des instructions qui indiquent quels moyens d'entrée doivent être connectés à des moyens de sortie pendant un créneau temporel prédéterminé,

**caractérisé en ce que** :
ledit moyen à table de routage est divisé en une pluralité de tables $T_1$, 1=1, ... L, chaque table ayant un poids $w_1$ supérieur ou égal à 1, qui spécifie la valeur de la largeur de bande par créneau dans une table par rapport à un créneau dans l'autre table ou d'autres tables.

**2.** Routeur selon la revendication 1, dans lequel le moyen à table de routage est divisé en une pluralité de niveaux hiérarchiques et en ce que chaque table est allouée à un certain niveau hiérarchique.

**3.** Routeur selon la revendication 1 ou 2, dans lequel les poids desdites tables sont programmables.

**4.** Routeur selon l'une quelconque des revendications précédentes, dans lequel chaque table $T_1$ comprend un nombre $S_1$ de lignes.

**5.** Routeur selon l'une quelconque des revendications précédentes, dans lequel à chaque période de temps prédéterminée, les tables $T_1$ sont parcourues cycliquement un nombre $w_1$ de fois qui correspond au poids respectif $w_1$ supérieur ou égal à 1.

**6.** Routeur selon les revendications 4 et 5, dans lequel la période effective de parcours cyclique des créneaux $S_e$ est :

$$S_e^{L} = \sum_{l=1}^{L} w_l \cdot S_l$$

**7.** Routeur selon l'une quelconque des revendications précédentes, dans lequel la façon dont les entrées des tables $T_1$ sont énumérées dépend des exigences de temps de latence dans un réseau dont fait partie le routeur.

**8.** Routeur selon l'une quelconque des revendications précédentes, comprenant une pluralité de moyens tampons (Q), chacun connecté entre un moyen d'entrée ($i_1$, ..., $i_N$) et les moyens de commutation respectifs, **caractérisé en ce que** chaque moyen tampon (Q) comprend une pluralité de parties tampons 1, ... L correspondant à la pluralité de tables $T_l$, chaque partie tampon étant respectivement allouée à une table, le moyen à table de routage étant prévu pour commander les parties tampons en conformité avec lesdites tables.

**9.** Routeur selon la revendication 8, dans lequel le moyen tampon (Q) est un moyen tampon du type premier entré, premier sorti.

Légendes des figures

Fig. 1
queues: files d'attente
switch: commutateur
slot table : table de créneaux
Fig. 4
layer control : commande de couche
slot tables : tables de créneaux
Fig. 6
separate queue per layer : file d'attente distincte pour chaque couche layer control : commande de couche

FIG.1

FIG.2

FIG.3

FIG.4

$$w_1 = 1, \quad T1_1 = \begin{bmatrix} \varnothing & 2 \\ \varnothing & \varnothing \end{bmatrix} \qquad\qquad T2_1 = \begin{bmatrix} \varnothing & \varnothing \\ \varnothing & 2 \end{bmatrix}$$

$$w_2 = 99, \; T1_2 = [\,\varnothing \quad \varnothing\,] \qquad\qquad T2_2 = [\,\varnothing \quad 1\,]$$

# FIG.5

# FIG.6